(19) **Europäisches Patentamt / European Patent Office / Office européen des brevets**

(11) **EP 2 232 762 B1**

(12) **FASCICULE DE BREVET EUROPEEN**

(45) Date de publication et mention de la délivrance du brevet:
**08.02.2012 Bulletin 2012/06**

(21) Numéro de dépôt: **08865750.7**

(22) Date de dépôt: **05.12.2008**

(51) Int Cl.:
**H04L 9/06** *(2006.01)*

(86) Numéro de dépôt international:
**PCT/FR2008/052217**

(87) Numéro de publication internationale:
**WO 2009/080950 (02.07.2009 Gazette 2009/27)**

(54) **PROCEDE DE CODAGE D'UN SECRET FORME PAR UNE VALEUR NUMERIQUE**

Verfahren zum Kodieren eines Geheimnisses, das aus einem Zahlenwert besteht

METHOD OF CODING A SECRET FORMED BY A NUMERICAL VALUE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **07.12.2007 FR 0708541**

(43) Date de publication de la demande:
**29.09.2010 Bulletin 2010/39**

(73) Titulaire: **MORPHO**
**75015 Paris (FR)**

(72) Inventeurs:
• **PELLETIER, Hervé**
**F-75015 Paris (FR)**
• **SENGMANIVANH, Isabelle**
**F-75015 Paris (FR)**

(74) Mandataire: **Cabinet Plasseraud**
**52, rue de la Victoire**
**75440 Paris Cedex 09 (FR)**

(56) Documents cités:
**WO-A-2006/046187    WO-A-2006/083179**
**FR-A- 2 820 914**

**Description**

L'invention concerne un procédé de codage d'un secret, formé par une valeur numérique.

L'essor considérable des communications par transmission de messages électroniques a très vite posé le problème de la confidentialité des données transmises.

Des solutions très sophistiquées de chiffrement/déchiffrement de ces données ont été proposées au moyen d'algorithmes de chiffrement à clé secrète unique, servant au chiffrement/déchiffrement, puis à clé publique, à laquelle est associée une clé privée, utilisée pour le déchiffrement des données, chiffrées au moyen de la clé publique.

Par exemple le document $D_1$=WO 2006/046187 décrit une méthode de masquage appliquée à l'aide d'un opérateur de groupe abélier sur une structure de Feistal.

Les solutions précitées donnent satisfaction, dans la mesure où les algorithmes à clé secrète peuvent être difficilement percés, tout au moins en l'absence de compromission de la clef secrète, et où les algorithmes à clé publique/clé privée n'impliquent pas de limitations quant à la diffusion de la clef publique et nécessitent la mise en oeuvre de moyens matériels et logiciels de complexité et de coût de calcul rédhibitoires en vue, soit de percer l'algorithme de chiffrement/déchiffrement, soit de retrouver la valeur de la clé privée, associée à la clé publique.

Dans tous les cas, utilisation d'un schéma cryptographique à clé secrète unique ou à clé publique, à laquelle est associée une clé privée, il est indispensable d'empêcher toute compromission de la clef secrète ou de la clé privée, afin de garantir la confidentialité des données transmises.

Alors que des composants cryptographiques à accès protégés satisfaisants ont été proposés, notamment intégrés sous forme de processeurs de sécurité des composants cryptographiques de cartes électroniques, dites cartes à puce, l'accès extérieur par l'intermédiaire du port d'entrée/sortie aux composants de sécurité de ces cartes électroniques pouvant être rendu extrêmement difficile voire pratiquement impossible, la manipulation des clés secrètes ou privées en lecture/écriture par ces composants est susceptible de permettre la compromission des clefs précitées, notamment des valeurs secrètes ou secrets entrant dans la définition de ces dernières.

Cette compromission est susceptible d'intervenir par attaque par « canaux cachés » (Side Chanel attack en anglais), ce type d'attaque pouvant par exemple consister à détecter les variations d'intensité du courant électrique consommé par le composant de sécurité ou la carte au cours de ces manipulations, nécessaires.

La présente invention a pour objet de remédier aux inconvénients des risques d'attaque par canaux cachés, par la mise en oeuvre d'un procédé de codage d'un secret, subdivisé en plusieurs éléments de secret non corrélés entre eux, la manipulation des éléments de secret ne pouvant permettre, bien que chaque élément de secret puisse, le cas échéant, être compromis, de retrouver le secret d'origine.

Le procédé de codage d'un secret formé par une valeur numérique, dans un schéma de cryptographie à clé secrète ou à clé publique dans lequel ce secret est divisé entre une pluralité d'un nombre déterminé d'éléments, dont une loi de composition représente la valeur de ce secret, objet de la présente invention, est remarquable en ce qu'il consiste, en outre, à recalculer une nouvelle pluralité d'éléments du secret sans jamais manipuler ce secret. Pour cela il faut calculer une première image de ce secret par application itérative de la loi de composition terme à terme entre la première image de rang précédent et le produit de composition selon cette loi de composition de l'élément de rang suivant et une valeur aléatoire de même rang choisie parmi un premier ensemble d'une même pluralité de valeurs aléatoires, calculer une première valeur numérique produit de composition de cette loi de composition appliquée successivement aux valeurs aléatoires de ce premier ensemble de valeurs aléatoires, calculer une deuxième valeur numérique produit de composition selon cette loi de composition appliquée successivement aux valeurs aléatoires d'un deuxième ensemble d'une même pluralité moins une de valeurs aléatoires, calculer une deuxième image de ce secret par application de la loi de composition inverse à la première image de ce secret et à cette deuxième valeur numérique, pour engendrer une image intermédiaire de ce secret, puis par application de cette loi de composition inverse à cette image intermédiaire et à cette première valeur numérique, pour engendrer cette deuxième image dudit secret, allouer à chacun de ces éléments successifs moins le dernier de cette pluralité d'éléments la valeur aléatoire de rang correspondant de ce deuxième ensemble d'au moins une valeur aléatoire et au dernier élément la valeur numérique de cette deuxième image.

Le procédé de codage d'un secret, objet de la présente invention, sera mieux compris à la lecture de la description et à l'observation des dessins ci-après dans lesquels :

-- la figure 1 représente, à titre illustratif, un organigramme général de mise en oeuvre des étapes constitutives du procédé objet de l'invention ;
-- la figure 2a représente, à titre illustratif, une première et une deuxième loi de composition applicable à des valeurs numériques et permettant la mise en oeuvre du procédé objet de la présente invention ;
-- la figure 2b représente, à titre illustratif, un organigramme spécifique de mise en oeuvre du procédé objet de l'invention, lorsque le la loi de composition représentée en figure 2a est une opération OU exclusif ;
-- la figure 2c représente à titre illustratif un organigramme spécifique de mise en oeuvre du procédé objet de l'invention, lorsque la loi de composition représentée en figure 2a est une opération d'addition ;

-- la figure 3 est un schéma fonctionnel d'un composant de sécurité d'un dispositif cryptographique spécialement adapté pour la mise en oeuvre du procédé objet de l'invention.

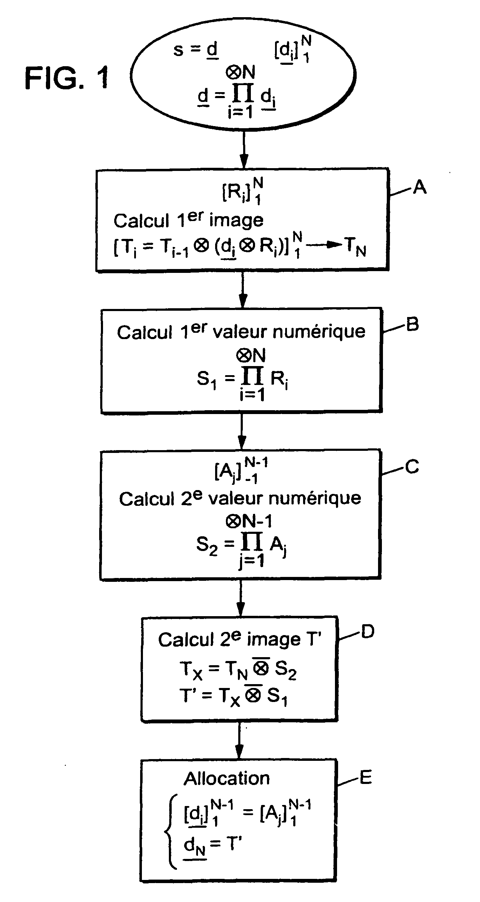

Une description plus détaillée du procédé de codage d'un secret, conforme à l'objet de la présente invention, sera maintenant donnée en liaison avec la figure 1.

D'une manière générale, on rappelle que le procédé, objet de l'invention, a pour objet le codage d'un secret $\underline{s}$ formé par une valeur numérique $\underline{d}$, dans un schéma de cryptographie à clé secrète ou à clé publique.

Il s'applique plus particulièrement à tout processus de calcul cryptographique dans lequel le secret s est subdivisé en une pluralité d'un nombre déterminé d'éléments de secret, noté chacun $d_i$, pluralité d'éléments dénommée ci-après $[d_i]_1^N$ dont une loi de composition notée $\otimes$ représente la valeur numérique du secret $\underline{s}$.

En référence à la figure 1, le secret $\underline{s}$ et la valeur numérique $\underline{d}$ représentant ce dernier vérifient la relation (1) :

$$s \; = \; \underline{d} \quad ; \quad [d_i]_1^N$$

$$\underline{d} \; = \; \prod_{i=1}^{\otimes N} d_i$$

Dans cette relation $\prod_{i=1}^{\otimes N} d_i$ représente le produit de composition de la loi de composition $\otimes$ appliquée à l'ensemble des N éléments $d_i$.

Ainsi que représenté sur la figure 1, le procédé objet de l'invention consiste en une étape A à calculer une première image du secret s par application itérative de la loi de composition terme à terme entre la première image de rang précédent, notée $T_{i-1}$, et le produit de composition, selon cette loi de composition, de l'élément de rang i suivant, noté $d_i$ et une valeur aléatoire, notée $R_i$, choisie parmi un premier ensemble d'une même pluralité de valeurs aléatoires.

A l'étape A de la figure 1 le premier ensemble d'une même pluralité de valeurs aléatoires est noté $[R_i]_1^N$ .

En référence à l'étape A de la figure 1, l'opération de calcul de la première image TN vérifie la relation (2):

$$\left[T_i = T_{i-1} \otimes (d_i \otimes R_i)\right]_1^N \to T_N$$

Dans la relation précédente,

-- tri désigne la première image courante de rang i ;
-- $T_{i-1}$ désigne la première image précédente de rang i-1;
-- $d_i$ désigne l'élément courant de rang i ;
-- $R_i$ désigne la valeur aléatoire de rang i du premier ensemble de valeurs aléatoires ;
-- $T_N$ désigne la première image obtenue après calcul itératif.

L'étape A de la figure 1 est suivie d'une étape B consistant à calculer une première valeur numérique, notée $S_1$, produit de composition de la même loi de composition précitée appliquée successivement aux valeurs aléatoires du premier ensemble de valeurs aléatoires précédemment mentionné.

À l'étape B de la figure 1, la première valeur numérique $S_1$ vérifie la relation (3) :

$$S_1 \; = \; \prod_{i=1}^{\otimes N} R_i$$

L'étape B de la figure 1 est suivie d'une étape C consistant à calculer une deuxième valeur numérique, notée $S_2$, produit de composition, selon la même loi de composition précitée, appliquée successivement aux valeurs aléatoires d'un deuxième ensemble d'une même pluralité moins une de valeurs aléatoires.

En conséquence, le deuxième ensemble d'une même pluralité moins une de valeurs aléatoires est noté

$$\left[ A_j \right]_1^{N-1}$$

La deuxième valeur numérique vérifie la relation (4) :

$$S_2 = \overset{\otimes N-1}{\underset{j=1}{\pi}} A_j$$

L'étape C de la figure 1 est alors suivie d'une étape D consistant à calculer une deuxième image du secret notée T'.

En référence à l'étape D de la figure 1, on indique que la deuxième image T' précitée est calculée par application de la loi de composition inverse appliquée à la première image du secret $T_N$ et à cette deuxième valeur numérique $S_2$, pour engendrer une image intermédiaire notée $T_x$, puis par application de cette même loi de composition inverse appliquée à l'image intermédiaire $T_x$ et à la première valeur numérique $S_1$, pour engendrer la deuxième image du secret, notée T'. La loi de composition inverse est notée $\otimes$.

À l'étape D de la figure 1, le calcul de la deuxième image T' vérifie la relation (5) :

$$T_x = T_N \overline{\otimes} S_2$$

$$T' = T_x \overline{\otimes} S_1$$

L'étape D de la figure 1 est alors suivie d'une étape E consistant à allouer à chacun des éléments successifs de la pluralité d'éléments $\left[ d_i \right]_1^N$ , moins le dernier, la valeur aléatoire de rang correspondant à celle du deuxième ensemble d'au moins une valeur aléatoire, ensemble noté $\left[ A_j \right]_1^{N-1}$ et à allouer au dernier élément la valeur numérique de la deuxième image T' précitée.

En conséquence l'étape d'allocations représentées à l'étape E vérifie la relation (6) :

$$\left\{ \left[ d_i \right]_1^{N-1} = \left[ A_j \right]_1^{N-1} \right.$$

$$\left\{ d_N = T' \right.$$

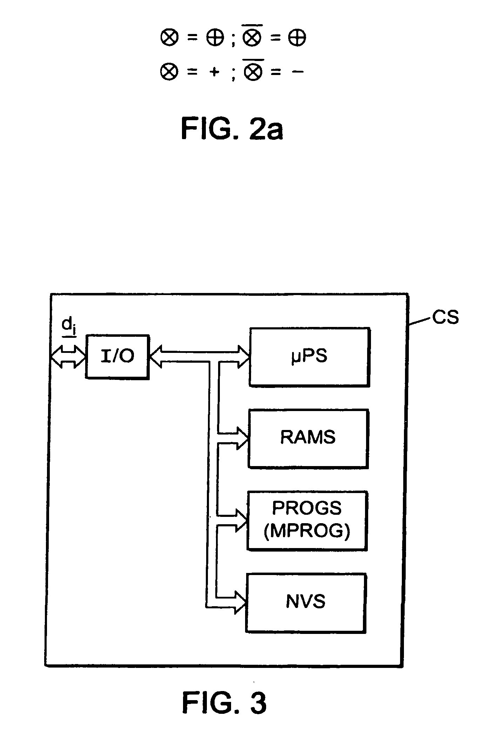

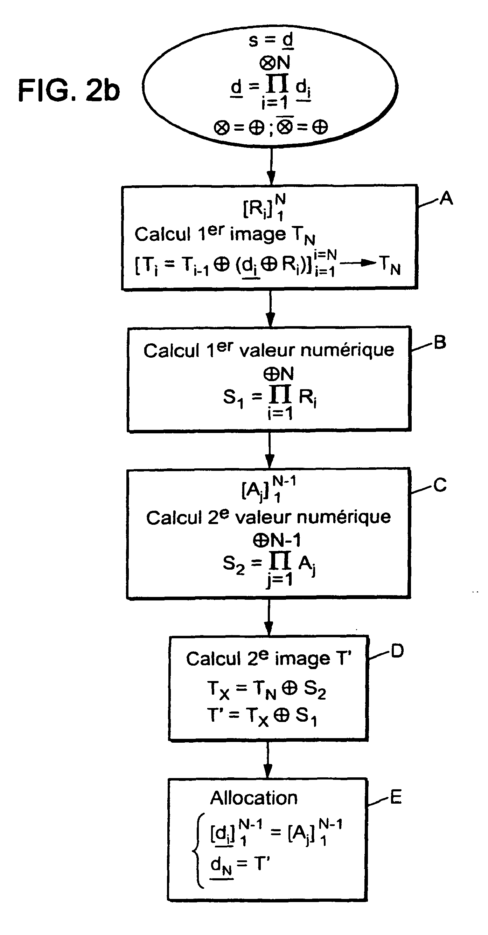

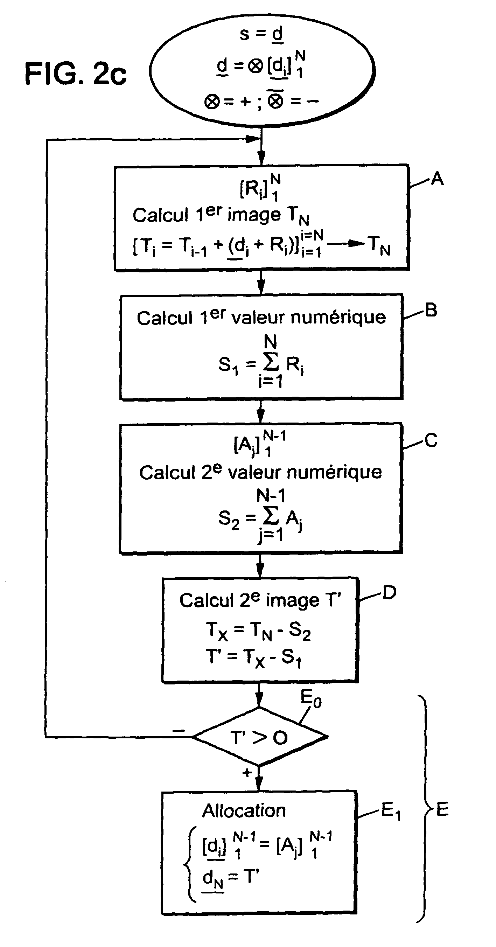

Une description plus détaillée d'une première et d'une deuxième variante de mise en oeuvre du procédé objet de l'invention sera maintenant donnée en liaison avec la figure 2a et les figures 2b et 2c, respectivement.

D'une manière générale, on indique que la loi de composition précédemment citée est formée par une opération arithmétique ou logique distributive, munie d'un élément neutre. Une loi de composition correspondante peut ainsi être appliquée à tout secret et à tout élément de secret formé par une valeur numérique constituée soit par un nombre entier soit par un nombre réel.

Ainsi, dans cette hypothèse, pour un secret s formé par une valeur numérique $\underline{d}$ de longueur L déterminée, chaque valeur aléatoire $R_i$ du premier respectivement $A_j$ du deuxième ensemble de valeurs aléatoires est choisie de longueur inférieure à $2^{L-N+1}$.

À titre d'exemple non limitatif, la loi de composition précitée peut consister, ainsi que représenté en figure 2a, en une opération OU exclusif par exemple. Elle peut en outre consister en une opération arithmétique telle que l'addition.

On note bien entendu, que la loi de composition précitée est alors munie d'une opération inverse, l'opération OU exclusif inchangée, lorsque l'opération OU exclusif constitue la loi de composition précitée, respectivement l'opération de soustraction, lorsque l'opération d'addition constitue la loi de composition précédemment citée.

Les lois de composition précédemment mentionnées et leur opération correspondante sont représentées au dessin de la figure 2a, illustrée par la relation (7) :

$$\otimes = \oplus; \overline{\otimes} \ = \ \oplus$$

$$\otimes = +; \overline{\otimes} = -$$

$$0$$

Dans la relation précédente,

$\oplus$ représente l'opération OU exclusif, conduite bit à bit sur les nombres entiers ou réels constituant les éléments de secret ou secret, ainsi que les nombres aléatoires ;

+ et - représentent l'opération d'addition et l'opération inverse de soustraction pour la loi de composition formée par l'addition arithmétique. En outre l'élément neutre est 0 pour les deux opérations.

Un mode de mise en oeuvre spécifique du procédé objet de l'invention est maintenant décrit en liaison avec la figure 2b, dans le cas de la mise en oeuvre non limitative d'une loi de composition formée par l'opération OU exclusif.

À l'étape A de la figure 2b, l'opération de calcul de la première image $T_N$ est donnée par la relation (8):

$$\left[T_i = T_{i-1} \oplus \left(d_i \oplus R_i\right)\right]_{i=1}^{i=N} \rightarrow T_N$$

À l'étape B de la figure 2b, l'opération de calcul de la première valeur numérique est donnée par la relation (9)

$$S_1 \ = \ \overset{\oplus N}{\underset{i=1}{\pi}} R_i \ ;$$

À l'étape C de la figure 2b, l'opération de calcul de la deuxième valeur numérique est donnée par la relation (10) :

$$S_2 = \overset{\oplus N-1}{\underset{j=1}{\pi}} A_j$$

À l'étape D de la figure 2b, l'opération de calcul de la deuxième image T' est donnée par la relation (11) :

$$T_x = T_N \oplus S_2$$

$$T' = T_x \oplus S_1$$

Enfin, l'étape E d'allocation est inchangée vis-à-vis de l'étape E d'allocation de la figure 1.

En outre, à titre d'exemple non limitatif la loi de composition précitée peut consister, ainsi que représenté en figure 2c, en une opération d'addition arithmétique.

À l'étape A de la figure 2c, l'opération de calcul de la première image $T_N$ est donnée par la relation (12) :

$$[T_i = T_{i-1} + (d_i + R_i)]_{i=1}^{i=N} \rightarrow T_N$$

À l'étape B de la figure 2c, l'opération de calcul de la première valeur numérique est donnée par la relation (13) :

$$S_1 = \sum_{i=1}^{N} R_i$$

À l'étape C de la figure 2c, l'opération de calcul de la deuxième valeur numérique est donnée par la relation (14) :

$$S_2 = \sum_{j=1}^{N-1} A_j$$

À l'étape D de la figure 2c, l'opération de calcul de la deuxième image T' est donnée par la relation (15) :

$$T_x = T_N - S_2$$
$$T' = T_x - S_1$$

En référence à la figure 2c, on peut observer que l'étape d'allocation E de la figure 1 est alors subdivisée en deux sous étapes si chaque élément di du secret doit être positif. Cette sous étape $E_0$ est un test de comparaison de supériorité de la deuxième image T' à la valeur zéro et une sous étapes $E_1$ d'allocation proprement dite, laquelle est également inchangée par rapport à l'étape d'allocations E de la figure 1.

La sous étape de test $E_0$ a pour objet de vérifier que la deuxième image T' est significative. Le caractère significatif de la deuxième image T' est obtenu lorsque la valeur numérique représentative de cette dernière est strictement supérieure à zéro.

Ainsi, sur réponse positive au test de comparaison de la sous étape $E_0$, la sous étape d'allocation proprement dite $E_1$ est appelée et réalisée de la même manière que dans le cas de la figure 1 ou de la figure 2b.

Au contraire, sur réponse négative à la sous étapes de test $E_0$, la deuxième image T' étant alors négative, un retour à l'étape A est exécuté pour reconduite du processus de calcul jusqu'à l'obtention d'une valeur positive représentant la deuxième image T'.

Une description d'un composant de sécurité de dispositif cryptographique comprenant un processeur sécurisé, une mémoire non volatile, une mémoire de travail, une mémoire de programme et un bus à accès protégé en lecture-écriture sera maintenant donnée en liaison avec la figure 3.

Sur la figure 3 précitée, le microprocesseur sécurisé est noté μPS, la mémoire de travail est notée RAMS, la mémoire de programme est notée PROGS, la mémoire non volatile est notée NVS et le bus interne est noté I/O.

Le composant de sécurité objet de l'invention est remarquable en ce que la mémoire de programme PROGS comporte un programme d'ordinateur incluant une suite d'instructions mémorisées dans cette mémoire de programme.

Lors de l'exécution de ces instructions, le processeur sécurisé μPS exécute les étapes de mise en oeuvre du procédé de codage d'un secret formé par la valeur numérique d dans tout schéma de cryptographie à clé secrète, ou à clé publique, ainsi que décrit précédemment dans la description en liaison avec les figures 1 à 2b.

Ainsi, le processeur de sécurité μPS délivre sur le bus à accès protégé en lecture-écriture noté I/O les seuls éléments de secret notés di successivement, sous le contrôle du dispositif cryptographique, non représenté au dessin de la figure 3.

On comprend, en particulier, que le procédé et le composant de sécurité objets de l'invention opèrent sur tout secret formé par une valeur numérique d constituant totalement ou partiellement soit une clé secrète dans un schéma de cryptographie à clé secrète, soit une clé privée dans tout schéma de cryptographie à clé publique.

Bien entendu le procédé et le composant de sécurité objets de l'invention précités sont susceptibles d'être mis en oeuvre pour le calcul de toute valeur de code d'accès, d'identification à vocation secrète d'un processus d'authentification, de non répudiation ou de signature.

**Revendications**

1. Procédé de codage d'un secret formé par une valeur numérique $\underline{d}$, dans un schéma de cryptographie à clé secrète ou à clé publique, dans lequel le secret est subdivisé en une pluralité d'un nombre N déterminé d'éléments $\underline{d_i}$, $[\underline{d_i}]_1^N$, dont une loi de composition représente la valeur numérique $\underline{d}$ dudit secret, **caractérisé en ce que** ledit procédé consiste en outre à:

-- calculer une première image $T_N$ dudit secret par application itérative de la loi de composition terme à terme entre ladite première image $T_{i-1}$ de rang i-1 et le produit de composition selon ladite loi de composition de l'élément $\underline{d_i}$ de rang i suivant et une valeur aléatoire $R_i$ de rang i choisie parmi un premier ensemble d'une pluralité de N valeurs aléatoires

$$[T_i = T_{i-1} \otimes (d_i \otimes R_i)]_{i=1}^{i=N} \rightarrow T_N;$$

-- calculer une première valeur numérique $S_1$ produit de composition de ladite loi de composition appliquée successivement aux dites valeurs aléatoires $R_i$ dudit premier ensemble de N valeurs aléatoires

$$S_1 = \overset{\otimes N}{\underset{i=1}{\pi}} R_i;$$

-- calculer une deuxième valeur numérique $S_2$ produit de composition selon ladite loi de composition appliquée successivement aux valeurs aléatoires $A_j$ d'un deuxième ensemble de N-1 valeurs aléatoires

$$S_2 = \overset{\otimes N-1}{\underset{j=1}{\pi}} A_j;$$

-- calculer une deuxième image T' dudit secret par application de la loi de composition inverse à ladite première image $T_N$ dudit secret et à ladite deuxième valeur numérique $S_2$, pour engendrer une image intermédiaire $T_x$ dudit secret, puis par application de ladite loi de composition inverse à ladite image intermédiaire $T_x$ et à ladite première valeur numérique $S_1$, pour engendrer ladite deuxième image T' dudit secret

$$T_x = T \overline{\otimes} S_2$$

$$T' = T_x \overline{\otimes} S_1$$

-- allouer à chacun des N-1 premiers éléments successifs $\underline{d_j}$ de ladite pluralité d'éléments $[\underline{d_j}]$ la valeur aléatoire $A_j$ de rang correspondant dudit deuxième ensemble d'au moins une valeur aléatoire et à l'élément $\underline{d_N}$ de rang N la valeur numérique de ladite deuxième image T'.

2. Procédé selon la revendication 1, dans lequel ladite loi de composition est formée par une opération arithmétique ou logique distributive, munie d'un élément neutre.

3. Procédé selon la revendication 2, **caractérisé en ce que** ladite opération logique est l'opération OU exclusif bit à bit.

4. Procédé selon la revendication 2, **caractérisé en ce que** ladite opération arithmétique est l'addition, la loi de composition inverse étant formée par la soustraction.

**5.** Procédé selon l'une des revendications précédentes, **caractérisé en ce que** pour un secret formé par une valeur numérique $\underline{d}$ de longueur L déterminée, chaque valeur aléatoire $R_i$ du premier respectivement $A_j$ du deuxième ensemble de valeurs aléatoires est choisie de longueur inférieure à $2^{L-N+1}$.

**6.** Procédé selon les revendications 4 et 5, **caractérisé en ce que** pour une opération arithmétique formée par l'addition, ledit procédé comporte en outre, préalablement à ladite étape consistant à allouer, une étape de comparaison de supériorité de la valeur numérique de ladite deuxième image T' à la valeur zéro, une réponse positive à la ladite étape de comparaison étant suivie de ladite étape consistant à allouer, ladite étape de comparaison étant suivie d'une étape de retour à ladite étape consistant à calculer ladite première image $T_N$ dudit secret pour itération du procédé, sinon.

**7.** Procédé selon l'une des revendications 1 à 6, **caractérisé en ce que** ledit secret formé par une valeur numérique $\underline{d}$ est soit une clé secrète dans un schéma de cryptographie à clé secrète, soit une clé privée dans un schéma de cryptographie à clé publique ou encore toute valeur de code d'accès, d'identification à vocation secrète d'un processus d'authentification, de non répudiation ou de signature.

**8.** Composant de sécurité d'un dispositif cryptographique comprenant un processeur sécurisé, une mémoire non volatile, une mémoire de travail, une mémoire de programme et un bus à accès protégé en lecture-écriture, **caractérisé en ce que** ladite mémoire de programme comporte un programme d'ordinateur incluant une suite d'instructions mémorisées dans ladite mémoire de programme, et **en ce que**, lors de l'exécution des dites instructions, ledit processeur sécurisé exécute les étapes du procédé selon l'une des revendications 1 à 7, ledit processeur de sécurité délivrant sur bus à accès protégé en lecture-écriture les seuls éléments $d_i$, successivement, sous le contrôle dudit dispositif cryptographique.

**Claims**

**1.** A method of coding a secret formed by a numerical value $\underline{d}$, in a secret-key or public-key cryptography scheme, in which the secret is subdivided into a plurality of a determined number N of elements $\underline{d_i}$, $[\underline{d_i}]_1^N$, of which a composition law represents the numerical value $\underline{d}$ of said secret, **characterized in that** said method consists furthermore in:

-- calculating a first image $T_N$ of said secret by iterative application of the composition law term by term between said first image $T_{i-1}$ of rank i-1 and the composition product according to said composition law of the element $\underline{d_i}$ of next rank i and a random value $R_i$ of rank $\underline{i}$, chosen from among a first set of a plurality of N random values

$$\left[ T_i = T_{i-1} \otimes (d_i \otimes R_i) \right]_{i=1}^{i=N} \rightarrow T_N \; ;$$

-- calculating a first numerical value $S_1$, the composition product of said composition law applied successively to said random values $R_i$ of said first set of N random values

$$S_1 = \overset{\otimes N}{\underset{i=1}{\pi}} R_i \; ;$$

-- calculating a second numerical value $S_2$, the composition product according to said composition law applied successively to the random values $A_j$ of a second set of N-1 random values

$$S_2 = \overset{\otimes N-1}{\underset{j=1}{\pi}} A_j \; ;$$

-- calculating a second image T' of said secret by applying the inverse composition law to said first image $T_N$ of said secret and to said second numerical value $S_2$, so as to produce an intermediate image $T_x$ of said secret,

and then by applying said inverse composition law to said intermediate image $T_x$ and to said first numerical value $S_1$, so as to produce said second image T' of said secret

$$T_x = T \; \overline{\otimes} \; S_2$$

$$T' = T_x \; \overline{\otimes} \; S_1$$

-- allocating to each of the first N-1 successive elements $d_i$ of said plurality of elements $[\underline{d_i}]$ the random value $A_j$ of corresponding rank of said second set of at least one random value and to the element $\underline{d}_N$ of rank N the numerical value of said second image T'.

2. The method as claimed in claim 1, in which said composition law is formed by a distributive arithmetic or logic operation, endowed with a neutral element.

3. The method as claimed in claim 2, **characterized in that** said logic operation is the bitwise exclusive OR operation.

4. The method as claimed in claim 2, **characterized in that** said arithmetic operation is addition, the inverse composition law being formed by subtraction.

5. The method as claimed in one of the preceding claims, **characterized in that** for a secret formed by a numerical value $\underline{d}$ of determined length L, each random value $R_i$ of the first respectively $A_j$ of the second set of random values is chosen of length less than $2^{L-N+1}$.

6. The method as claimed in claims 4 and 5, **characterized in that** for an arithmetic operation formed by addition, said method furthermore comprises, prior to said step consisting in allocating, a comparison step for comparing superiority of the numerical value of said second image T' with the zero value, a positive response to said comparison step being followed by said step consisting in allocating, said comparison step being followed by a step of returning to said step consisting in calculating said first image $T_N$ of said secret for iteration of the method, otherwise.

7. The method as claimed in one of claims 1 to 6, **characterized in that** said secret formed by a numerical value $\underline{d}$ is either a secret key in a secret-key cryptography scheme, or a private key in a public-key cryptography scheme or else any value of access code, for identification with secret intent of an authentication, non-repudiation or signature process.

8. A security component of a cryptographic device comprising a secure processor, a nonvolatile memory, a work memory, a program memory and a bus with read-write protected access, **characterized in that** said program memory comprises a computer program including a series of instructions stored in said program memory, and **in that**, during the execution of said instructions, said secure processor executes the steps of the method as claimed in one of claims 1 to 7, said security processor delivering on bus with read-write protected access solely the elements $d_i$, successively, under the supervision of said cryptographic device.

**Patentansprüche**

1. Verfahren zur Kodierung einer Geheiminformation, die aus einen numerischen Wert $\underline{d}$ gebildet wird, in einem Verschlüsselungsschema mit geheimem Schlüssel oder mit öffentlichem Schlüssel, wobei die Geheiminformation in eine mit einer Zahl N bestimmten Vielzahl von Elementen $\underline{d}_i$, $\left[\underline{d}_i\right]^N$ unterteilt ist, wobei ein Kompositionsgesetz den numerischen Wert $\underline{d}$ der Geheiminformation darstellt, **dadurch gekennzeichnet, dass** das Verfahren des Weiteren besteht aus:

- - Berechnung eines ersten Bildes $T_N$ der Geheiminformation durch iterative Anwendung des Kompositionsgesetzes Term für Term zwischen dem ersten Bild $T_{i-1}$ von Rang i-1 und dem Kompositionsprodukt gemäß dem Kompositionsgesetz des Elementes $\underline{d}_i$ von dem darauf folgenden Rang i und einem Zufallswert $R_i$ von

Rang i, der aus einer ersten Einheit einer Vielzahl von N Zufallswerten ausgewählt ist

$$[T_i = T_{i-1} \otimes (d_i \otimes R_i)]_{i=1}^{i=N} \to T_N;$$

- - Berechnung eines ersten numerischen Wertes $S_1$, der ein Kompositionsprodukt des Kompositionsgesetzes ist, dass sukzessiv auf die Zufallswerte $R_i$ der ersten Einheit von N Zufallswerten angewandt wird

$$S_1 = \prod_{i=1}^{\otimes N} R_i;$$

- - Berechnung eines zweiten numerischen Wertes $S_2$, der ein Kompositionsprodukt gemäß des Kompositionsgesetzes ist, dass sukzessiv auf die Zufallswerte $A_j$ einer zweiten Einheit von N-1 Zufallswerten angewandt wird

$$S_2 = \prod_{j=1}^{\otimes N-1} A_j;$$

- - Berechnung eines zweiten Bildes T' der Geheiminformation durch Anwendung des inversen Kompositionsgesetzes auf das erste Bild $T_N$ der Geheiminformation und auf den zweiten numerischen Wert $S_2$, um ein Zwischenbild $T_x$ der Geheiminformation zu erzeugen, und anschließend durch Anwendung des inversen Kompositionsgesetzes auf das Zwischenbild $T_x$ und auf den ersten numerischen Wert $S_1$, um das zweite Bild T' der Geheiminformation zu erzeugen

$$T_x = T \;\overline{\otimes}\; S_2$$

$$T' = T_x \;\overline{\otimes}\; S_1$$

- - Zuweisung des Zufallswertes $A_j$ von entsprechendem Rang der zweiten Einheit des mindestens einen Zufallswertes jedem der N-1 ersten sukzessiven Elemente $\underline{d_i}$ der Vielzahl von Elementen $\left[\underline{d_i}\right]^N$, und des numerischen Wertes des zweiten Bildes T' dem Element $\underline{d_N}$ von Rang N.

2. Verfahren nach Anspruch 1, **dadurch gekennzeichnet, dass** das Kompositionsgesetz durch eine arithmetische oder eine distributiv-logische Operation, die mit einem neutralen Element versehen ist, gebildet ist.

3. Verfahren nach Anspruch 2, **dadurch gekennzeichnet, dass** die logische Operation die "exklusives Oder" Operation Byte für Byte ist.

4. Verfahren nach Anspruch 2, **dadurch gekennzeichnet, dass** die arithmetische Operation die Addition ist, wobei das inverse Kompositionsgesetz durch die Subtraktion gebildet ist.

5. Verfahren nach einem der vorherigen Ansprüche, **dadurch gekennzeichnet, dass** für eine Geheiminformation, die aus einem numerischen Wert $\underline{d}$ von vorbestimmter Länge L gebildet ist, für jeden Zufallswert $R_i$ der ersten $A_j$ bzw. der zweiten Einheit von Zufallswerten eine Länge ausgewählt ist, die kleiner als $2^{L-N+1}$ ist.

6. Verfahren nach den Ansprüchen 4 und 5, **dadurch gekennzeichnet, dass** für eine arithmetische Operation, die durch die Addition gebildet ist, das Verfahren im Vorfeld zum Zuweisungsschritt des Weiteren einen Schritt zum Vergleich der Superiorität des numerischen Wertes des zweiten Bildes T' mit dem Wert 0 aufweist, wobei bei einer positiven Antwort auf den Vergleichsschritt der Zuweisungsschritt folgt, und wobei andernfalls auf den Vergleichsschritt ein Rückkehrschritt zu dem Schritt folgt, der darin besteht, das erste Bild $T_N$ der Geheiminformation zur Iteration des Verfahrens zu berechnen.

7. Verfahren nach einem der Ansprüche 1 bis 6, **dadurch gekennzeichnet, dass** die Geheiminformation, die aus einem numerischen Wert $\underline{d}$ gebildet ist, entweder ein geheimer Schlüssel in einem Verschlüsselungsschema mit geheimem Schlüssel oder ein privater Schlüssel in einem Verschlüsselungsschema mit öffentlichem Schlüssel oder jeglichem Codewert zum Zugang, zur geheimen Identifizierung eines Authentisierungsvorganges, zur Nachweisbarkeit oder zur Unterschrift ist.

8. Sicherheitsbauelement einer Verschlüsselungsvorrichtung, das einen gesicherten Prozessor, einen nicht flüchtigen Datenspeicher, einen Arbeitsspeicher, einen Programmspeicher und einen Bus mit geschütztem Zugang im Lese- und Schreibmodus aufweist, **dadurch gekennzeichnet, dass** der Programmspeicher ein Computerprogramm mit einer Abfolge von Befehlen, die im Programmspeicher gespeichert sind, aufweist, und dass beim Ausführen der Befehle der gesicherte Prozessor die Schritte des Verfahrens nach einem der Ansprüche 1 bis 7 ausführt, wobei der Sicherheitsprozessor sukzessiv auf einem Bus mit geschütztem Zugang im Lese- und Schreibmodus die einzigen Elemente $\underline{d}_i$ unter der Steuerung der Verschlüsselungsvorrichtung liefert.

FIG. 1

$$s = \underline{d} \qquad [\underline{d_i}]_1^N$$
$$\underline{d} = \overset{\otimes N}{\underset{i=1}{\prod}} \underline{d_i}$$

$[R_i]_1^N$
Calcul 1$^{er}$ image
$[T_i = T_{i-1} \otimes (\underline{d_i} \otimes R_i)]_1^N \longrightarrow T_N$ — A

Calcul 1$^{er}$ valeur numérique — B
$$S_1 = \overset{\otimes N}{\underset{i=1}{\prod}} R_i$$

$[A_j]_{-1}^{N-1}$
Calcul 2$^e$ valeur numérique — C
$$S_2 = \overset{\otimes N-1}{\underset{j=1}{\prod}} A_j$$

Calcul 2$^e$ image T' — D
$$T_X = T_N \, \overline{\otimes} \, S_2$$
$$T' = T_X \, \overline{\otimes} \, S_1$$

Allocation — E
$$\begin{cases} [\underline{d_i}]_1^{N-1} = [A_j]_1^{N-1} \\ \underline{d_N} = T' \end{cases}$$

$$\otimes = \oplus \ ; \ \overline{\otimes} = \oplus$$
$$\otimes = + \ ; \ \overline{\otimes} = -$$

## FIG. 2a

FIG. 3

**FIG. 2b**

$$s = \underline{d}$$
$$\underline{d} = \prod_{i=1}^{\otimes N} \underline{d_i}$$
$$\otimes = \oplus \,;\, \overline{\otimes} = \oplus$$

**A**

$$[R_i]_1^N$$
Calcul 1$^{er}$ image $T_N$
$$[T_i = T_{i-1} \oplus (\underline{d_i} \oplus R_i)]_{i=1}^{i=N} \longrightarrow T_N$$

**B**

Calcul 1$^{er}$ valeur numérique
$$S_1 = \prod_{i=1}^{\oplus N} R_i$$

**C**

$$[A_j]_1^{N-1}$$
Calcul 2$^e$ valeur numérique
$$S_2 = \prod_{j=1}^{\oplus N-1} A_j$$

**D**

Calcul 2$^e$ image T'
$$T_X = T_N \oplus S_2$$
$$T' = T_X \oplus S_1$$

**E**

Allocation
$$\begin{cases} [\underline{d_j}]_1^{N-1} = [A_j]_1^{N-1} \\ \underline{d_N} = T' \end{cases}$$

FIG. 2c

$$s = \underline{d}$$

$$\underline{d} = \otimes \, [\underline{d_i}]_1^N$$

$$\otimes = + \; ; \; \overline{\otimes} = -$$

$$[R_i]_1^N$$

Calcul 1$^{er}$ image $T_N$

$$[T_i = T_{i-1} + \underline{(d_i} + R_i)]_{i=1}^{i=N} \longrightarrow T_N$$

— A

Calcul 1$^{er}$ valeur numérique

$$S_1 = \sum_{i=1}^{N} R_i$$

— B

$$[A_j]_1^{N-1}$$

Calcul 2$^{e}$ valeur numérique

$$S_2 = \sum_{j=1}^{N-1} A_j$$

— C

Calcul 2$^{e}$ image T'

$$T_X = T_N - S_2$$

$$T' = T_X - S_1$$

— D

$E_0$

$$T' > 0$$

−

+

Allocation

$$\begin{cases} [\underline{d_i}]_1^{N-1} = [A_j]_1^{N-1} \\ \underline{d_N} = T' \end{cases}$$

— $E_1$

$\}$ E

15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006046187 A